# FASCICULE DE BREVET EUROPEEN

(11) **EP 0 673 852 B1**
(45) Date de publication et mention de la délivrance du brevet: **09.02.2000**
(21) Numéro de dépôt: 95201326.6
(22) Date de dépôt: 12.10.1994
(51) Int. Cl.: B65D 47/20, B65D 47/30, B65D 47/28, B05B 11/00

(54) **Ensemble de distribution équipé d'une soupape unidirectionelle**
Ausgabevorrichtung versehen mit einem Rückschlagventil
Dispensing assembly provided with a check valve

(30) Priorité: 21.10.1993 FR 9312562
(43) Date de publication de la demande: 27.09.1995
(62) Demande divisionnaire de: 94402287.0
(73) Titulaire: L'OREAL, 75008 Paris (FR)
(72) Inventeur: Gueret, Jean-Louis, F-75018 Paris (FR)
(74) Mandataire: Peuscet, Jacques

(56) Documents cités:
- EP-A- 0 452 196
- EP-A- 0 452 260
- EP-A- 0 505 299
- DE-A- 1 532 471
- DE-U- 9 307 083
- FR-A- 1 485 950
- US-A- 1 965 812
- US-A- 4 412 634

## Description

La présente invention concerne un ensemble de distribution d'un produit fluide sous forme de liquide ou de crème (ou pâte), comme par exemple un produit cosmétique.

On connaît de nombreux ensembles de distribution comportant un récipient, contenant le produit à distribuer, sur lequel on fixe, de façon amovible ou non, une tête de distribution. Cette tête de distribution comporte un dispositif permettant à l'utilisateur d'assurer à volonté la distribution du produit, et un canal de distribution communiquant, d'une part, avec le récipient contenant le produit à distribuer, et, d'autre part, avec l'extérieur.

De façon connue, le récipient peut être constitué d'un conteneur unique divisé par des cloisons internes en plusieurs compartiments, chacun des compartiments étant relié à un canal, les deux canaux étant portés par la même tête de distribution.

Il est connu qu'après la distribution du produit une partie de celui-ci reste dans le canal de distribution. Cette partie du produit est en contact avec l'air lors de la reprise d'air de la tête de distribution et, éventuellement, au cours du stockage. Le produit peut donc être dégradé par oxydation ou souillé par les impuretés et les micro-organismes de l'air et, par conséquent, lors d'une distribution ultérieure, le produit distribué pourra avoir perdu ses qualités et même être devenu nocif.

Il est connu par DE-A-1 532 471 de fermer un récipient en introduisant dans son goulot un bouchon de forme sphérique ou conique portant un disque en matériau élastique. Le goulot du récipient porte un capuchon qui, par dévissage, permet de dégager des ouvertures. Le bord du disque s'appuie sur le capuchon et au niveau des ouvertures, le bord du disque peut se déformer sous la pression du produit à distribuer.

EP-A-0 452 196 décrit un système de fermeture constitué d'une pastille coopérant bord à bord avec un siège rigide. La pastille est fixée sur une tige qui est disposée à l'intérieur d'une chambre. La pastille et la tige sont susceptibles de se déformer sous la poussée du produit à distribuer.

US-A-4 124 150 montre un ensemble de distribution d'un produit fluide qui comporte un récipient et une tête de distribution contenant un canal de distribution du produit à distribuer, un système de fermeture étant situé à la partie terminale, s'ouvrant sur l'extérieur, du canal de distribution, ledit système étant formé par un obturateur et par un siège, qui fait partie d'une pièce de la tête de distribution, l'obturateur étant constitué par une lèvre élastique en contact avec le siège lorsqu'il n'y a pas de distribution, s'écartant dudit siège par flexion perpendiculairement audit siège sous la pression du produit à distribuer et revenant par élasticité en contact avec ledit siège lorsque cesse la distribution, l'obturateur étant soumis à l'action d'un organe de contrainte ayant tendance à le maintenir appliqué sur le siège avec lequel il coopère pour assurer l'étanchéité du contact de fermeture. Le système de fermeture ainsi constitué peut être considéré comme relativement étanche. Toutefois, l'organe de contrainte est formé par une sorte de lame ressort, en saillie extérieure, relativement encombrante et le montage de cet organe de contrainte n'apparaît pas très fiable.

US-A-1 965 812 (correspondant au préambule de la revendication 1) décrit un dispositif de fermeture comportant une lame métallique flexible reposant sur le siège. La lame métallique est associée à un talon qui est susceptible d'agir comme organe de contrainte. Cependant, la lame métallique n'est pas susceptible de déformation élastique et le talon a la même épaisseur que la lame.

La présente invention a pour but de fournir, pour de tels ensembles de distribution, un système de fermeture unidirectionnel robuste et fiable, qui puisse être parfaitement étanche au repos, c'est-à-dire lorsqu'il n'y a pas distribution de produit, qui ne s'ouvre que sous la pression du produit à distribuer, et qui soit de réalisation simple.

Un tel système de fermeture unidirectionnel peut être rendu aseptique, ce qui est avantageux, notamment, dans le cas où l'on distribue des produits dégradables ou ne contenant pas de conservateurs ; mais, pour de nombreux produits tels que, par exemple, les crèmes solaires, une telle asepsie n'est pas nécessaire. Ledit système de fermeture peut être aussi utilisé avec profit lorsque l'ensemble comprend un récipient constitué par un tube ou une poche souple déformable ou par un récipient comportant un piston suiveur nécessitant une absence de reprise d'air. Mais, dans le cas où une reprise d'air est nécessaire, on munit en général la tête de distribution d'une valve de reprise d'air en plus du système de fermeture aseptique, car ledit système de fermeture ne permet pas la reprise d'air ; on perd alors le bénéfice de la simplicité ; l'invention prévoit également de rendre possible une reprise d'air et de réaliser un système qui permette à la fois d'assurer la distribution et la reprise d'air mais qui évite néanmoins l'introduction dans le produit, au cours de sa distribution ou au cours du stockage, de souillures accidentelles, par exemple de sable pour une crème solaire.

La présente invention a donc pour objet un ensemble de distribution d'un produit fluide qui comporte un récipient et une tête de distribution munie d'un canal de distribution qui s'ouvre sur l'extérieur, un système de fermeture étant situé à celle des extrémités du canal de distribution qui s'ouvre sur l'extérieur, ledit système de fermeture étant formé, d'une part, d'un siège qui fait partie d'une pièce de la tête de distribution, et, d'autre part, de la lame flexible d'un organe de fermeture réalisé en matériau flexible, ladite lame flexible ayant un plan longitudinal médian de symétrie, ledit organe de fermeture comportant d'une part, ladite lame flexible et, d'autre part, un organe de contrainte constitué par un talon fixé sur la tête de distribution, ledit talon comportant un plan moyen qui est perpendiculaire au plan longitudinal médian de symétrie de la lame flexible et qui renferme le centre de gravité du talon, la lame flexible ayant dans son plan longitudinal médian de symétrie, une ligne médiane qui, au voisinage du talon, est sensiblement rectiligne, la ligne médiane de la lame flexible au voisinage du talon formant un angle avec un plan parallèle au plan moyen du talon, ladite lame flexible coopérant avec le siège pour, lorsqu'il n'y a pas de distribution, obturer de façon étanche ou non l'extrémité ouverte du canal de distribution et s'écartant au moins partiellement dudit siège par flexion sous la pression du produit à distribuer et revenant par élasticité dans sa position initiale, lorsque cesse la distribution, sous l'action dudit organe de contrainte, le talon formant le seul organe de contrainte de la lame flexible qui a tendance à la ramener dans sa position initiale, caractérisé par le fait que la lame est en matériau pouvant se déformer élastiquement, que le talon constitue une zone de l'organe de fermeture dont l'épaisseur, dans sa zone de raccordement avec la lame en matériau pouvant se déformer élastiquement, est supérieure à celle de la lame flexible, l'épaisseur du talon étant repérée, perpendiculairement au plan moyen du talon, sur la projection du talon sur le plan longitudinal médian de symétrie de la lame flexible alors que l'épaisseur de la lame flexible est repérée, dans son plan longitudinal médian de symétrie, perpendiculairement à la ligne médiane de ladite lame flexible.

Avantageusement, la lame élastique est enchâssée dans la paroi de la tête de distribution, au moins au niveau de son extrémité assurant la fermeture.

Il est entendu que l'étanchéité mentionnée ci-dessus doit être suffisante pour empêcher pratiquement toute aspiration d'air à travers le système de fermeture après la fin de la distribution du produit, quelle que soit la viscosité du produit à distribuer lorsqu'il n'y a pas de reprise d'air ; l'étanchéité étant quelque peu fonction de la zone de contact entre l'obturateur et le siège, l'invention prévoit de choisir une zone de contact ayant une dimension suffisante pour que cette étanchéité soit assurée ; le système de fermeture forme donc une valve ou une soupape qui ne peut s'ouvrir que dans un sens : le sens de distribution du produit.

Le système de fermeture selon l'invention, qui, en pratique, n'est constitué que par une faible zone de contact entre un obturateur en matériau flexible et un siège, a l'avantage de pouvoir s'adapter sur toutes les têtes de distribution, qu'elles soient montées sur des tubes soudés, des distributeurs à piston suiveur ou à poche souple ou sur des flacons rigides. Il peut également facilement être intégré à des têtes de distribution ayant des formes très variables. En effet, l'obturateur et la pièce portant le siège de l'obturateur peuvent avoir des formes diverses.

L'obturateur peut être en toute matière pouvant se déformer élastiquement. Il est, de préférence, en élastomère naturel, synthétique ou thermoplastique, comme, par exemple, les copolymères styrène-butadiène, les caoutchoucs nitriles, le polychloroprène ou néoprène, le caoutchouc EPDM, les polyuréthanes, le caoutchouc de silicone et les copolymères éthylène-vinylacétate.

Le siège, est de préférence, en un matériau rigide.

L'organe de contrainte a pour fonction de maintenir l'obturateur appliqué sur le siège au cours du stockage et d'augmenter la pression nécessaire pour obtenir la déformation de l'obturateur. On améliore ainsi l'étanchéité du système de fermeture. Il a également pour fonction de faciliter le retour de l'obturateur dans sa position de fermeture. L'organe de contrainte étant constitué par un talon que présente l'organe de fermeture, c'est l'élasticité du matériau flexible combinée à la disposition angulaire existant entre les directions selon lesquelles s'étendent le talon, d'une part, et la lame élastique, d'autre part, qui confère à la lame élastique une contrainte de flexion dans le sens correspondant à une pression de la lame élastique, et donc de son extrémité, sur le siège avec lequel elle coopère pour la fermeture de la partie terminale du canal de distribution qu'entoure ledit siège.

Lorsque la reprise d'air est souhaitée, la lame élastique ferme suffisamment l'extrémité du canal de distribution pour empêcher la pénétration accidentelle d'impuretés, mais, la lame élastique coopérant de façon non étanche avec le siège, la reprise d'air est possible.

Avantageusement, le talon est de forme générale parallélépipèdique ; le talon présente un ergot d'accrochage longiligne.

En variante, le talon est de forme générale cylindrique ; de préférence, le talon est de forme annulaire.

Le talon est en deux pièces.

Le talon est emmanché à force dans un logement correspondant de la tête de distribution.

Le talon s'étend approximativement perpendiculairement au plan dans lequel s'étend la lame élastique ; en variante, le talon et le plan dans lequel s'étend la lame élastique forment un angle entre eux différent de 90°.

Le talon peut être placé transversalement par rapport à la lame, à l'arrière de celle-ci ; le talon peut également s'étendre parallèlement à l'axe longitudinal de la lame, en étant en deux pièces, disposées de chaque côté de celle-ci ; le talon peut être proche de la zone arrière de la lame, et une traverse de renforcement peut relier sur une partie de leur hauteur proche de la lame les deux pièces constituant le talon.

Le talon peut également être proche de la zone médiane de la lame.

Selon une forme de réalisation, la lame élastique présente trois portions faisant deux à deux un angle entre elles.

Avantageusement, la lame présente une partie arrière s'étendant au delà de sa zone de raccordement au talon, ladite partie arrière prenant appui sur une partie de la tête de distribution ; de préférence, la partie arrière est mise en compression après montage de l'organe de fermeture sur la tête de distribution.

Selon une forme de réalisation préférée, la lame s'étend au repos dans un plan qui fait un angle avec un plan perpendiculaire à celui selon lequel s'étend le talon, ledit angle étant supérieur à celui que font ces mêmes plans lorsque l'organe de fermeture est fixé sur la tête de distribution.

Selon une variante, le canal de distribution, est réalisé en partie à l'intérieur de l'organe de fermeture.

De préférence, la tête de distribution qui porte l'organe de fermeture, est montée sur le récipient en étant mobile par rapport à lui.

Avantageusement, la tête de distribution, qui porte l'organe de fermeture, présente une jupe cylindrique externe, une jupe de maintien et une jupe interne, cylindriques, coaxiales, de section circulaire, entourant un embout creux muni d'une échancrure longitudinale, le récipient portant un conduit monté de manière étanche entre l'embout creux et la jupe interne, le conduit étant muni d'une échancrure, le canal de distribution débouchant à l'intérieur dans l'espace annulaire défini entre l'embout creux et la jupe interne au droit de l'échancrure de l'embout creux, la tête de distribution étant ainsi montée à rotation sur le récipient.

En variante, l'organe de fermeture et au moins une partie du canal de distribution sont portés par un organe mobile monté, sur la tête de distribution, mobile par rapport à elle ; l'organe mobile est déplaçable en translation par rapport à la tête de distribution ; l'organe mobile est monté à rotation sur la tête de distribution.

La tête de distribution peut être montée par claquage ou vissage ; de préférence, des moyens d'ouverture rapide à au moins une rampe permettent de désolidariser la tête de distribution de l'ensemble de distribution ; de tels moyens sont, par exemple, du genre de ceux décrits dans FR-A-2 470 737.

La tête de distribution peut être moulée d'une seule pièce, avec une charnière-film de liaison entre la paroi de la tête de distribution et une partie munie de la lame élastique. La tête de distribution est avantageusement réalisée en bi-matière, la lame élastique étant réalisée en une matière surinjectée plus souple que la matière du corps de la tête de distribution.

Pour mieux faire comprendre l'objet de l'invention, on va en décrire, maintenant, à titre d'exemple purement illustratif et non limitatif, un mode de réalisation représenté sur les dessins annexés.

Sur ces dessins :
- la figure 1 est une vue partielle, partiellement en coupe, d'un ensemble de distribution selon l'invention ;
- la figure 1A est une vue partielle selon la flèche F de la figure 1, l'organe de fermeture n'étant pas mis en place ;
- la figure 2 est une vue en perspective de l'organe de fermeture équipant la tête de distribution de l'ensemble de distribution de la figure 1, à plus grande échelle ;

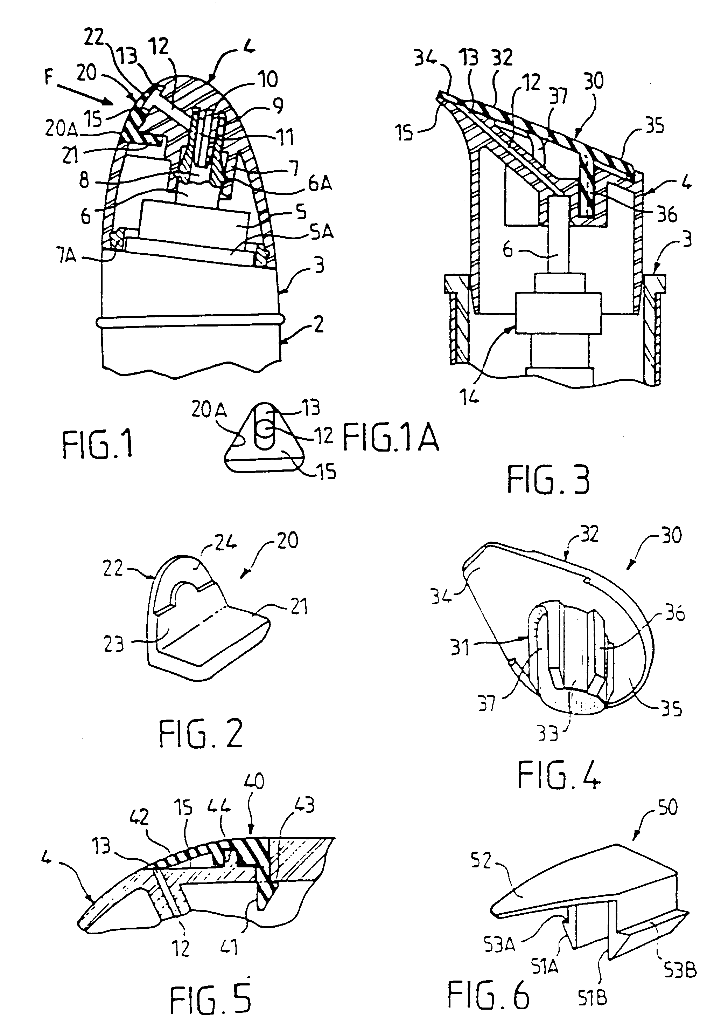

- les figures 1B, 1C, 2B sont analogues respectivement aux figures 1, 1A, 2 mais représentent une variante ;
- la figure 3 est une vue partielle, partiellement en coupe, d'une variante d'ensemble de distribution selon l'invention ;
- la figure 4 est une vue en perspective de l'organe de fermeture équipant la tête de distribution de l'ensemble de distribution de la figure 3, à plus grande échelle ;
- la figure 5 est une vue en coupe partielle d'une variante d'organe de fermeture selon l'invention équipant une tête de distribution ;
- la figure 6 est une vue en perspective d'une autre variante d'organe de fermeture destiné à équiper une tête de distribution ;

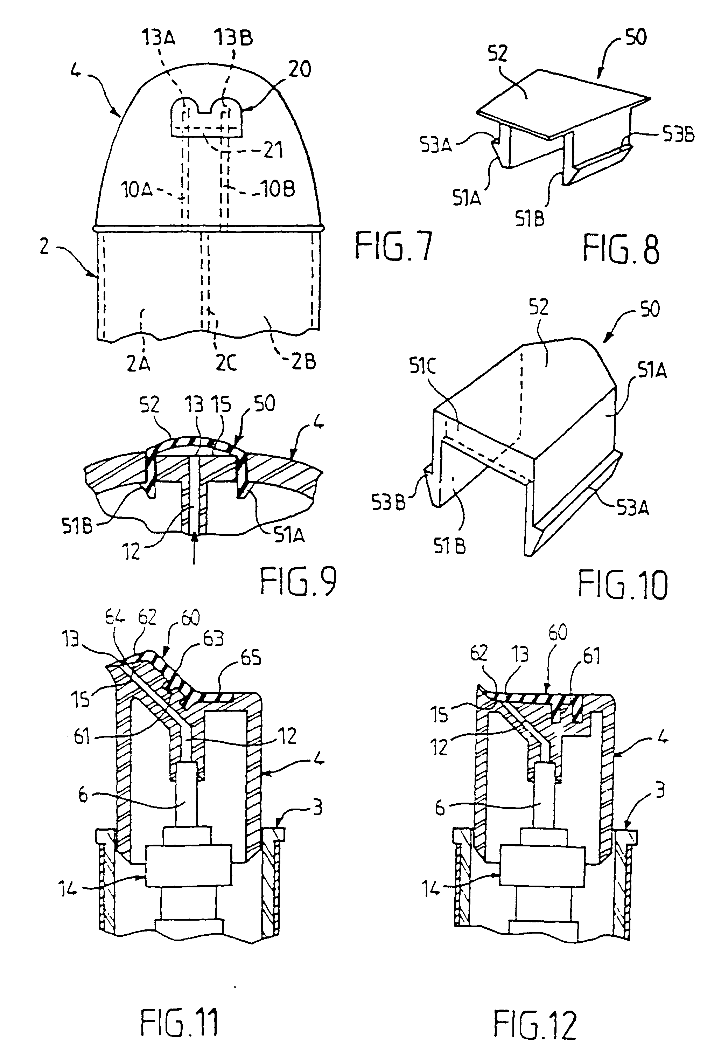

- la figure 7 est une vue partielle en élévation d'une variante d'ensemble de distribution selon l'invention ;
- la figure 8 est une variante de l'organe de fermeture selon la figure 6 ;
- la figure 9 est une vue en coupe partielle de l'organe de fermeture des variantes des figures 6, 8 et 10, au cours de la distribution du produit ;
- la figure 10 est une autre variante de l'organe de fermeture selon la figure 6 ;
- la figure 11 est une vue partielle, partiellement en coupe, d'une variante d'ensemble de distribution selon l'invention ;
- la figure 12 est une variante par rapport à la figure 11 ;

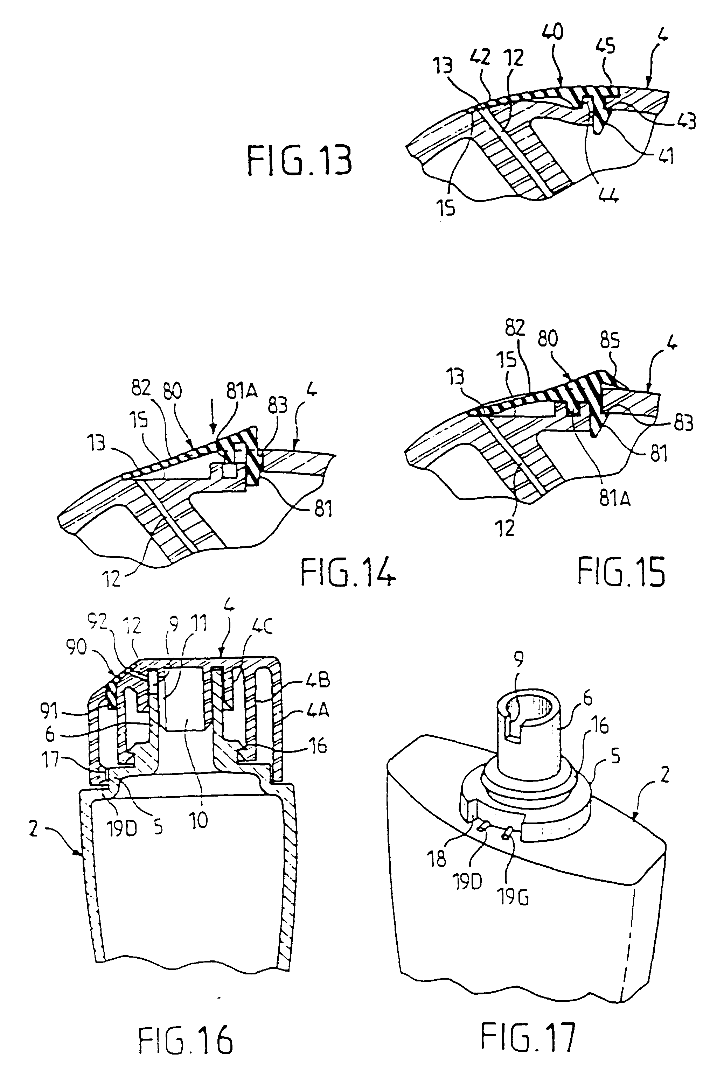

- la figure 13 est une variante par rapport à la figure 5 ;
- la figure 14 est une vue en coupe partielle d'une autre variante d'organe de fermeture selon l'invention équipant une tête de distribution ;
- la figure 15 est une variante par rapport à la figure 14 ;
- la figure 16 est une vue, partiellement en coupe, d'une variante d'ensemble de distribution selon l'invention ;
- la figure 17 est une vue partielle en perspective du récipient, seul, de l'ensemble de distribution de la figure 16 ;

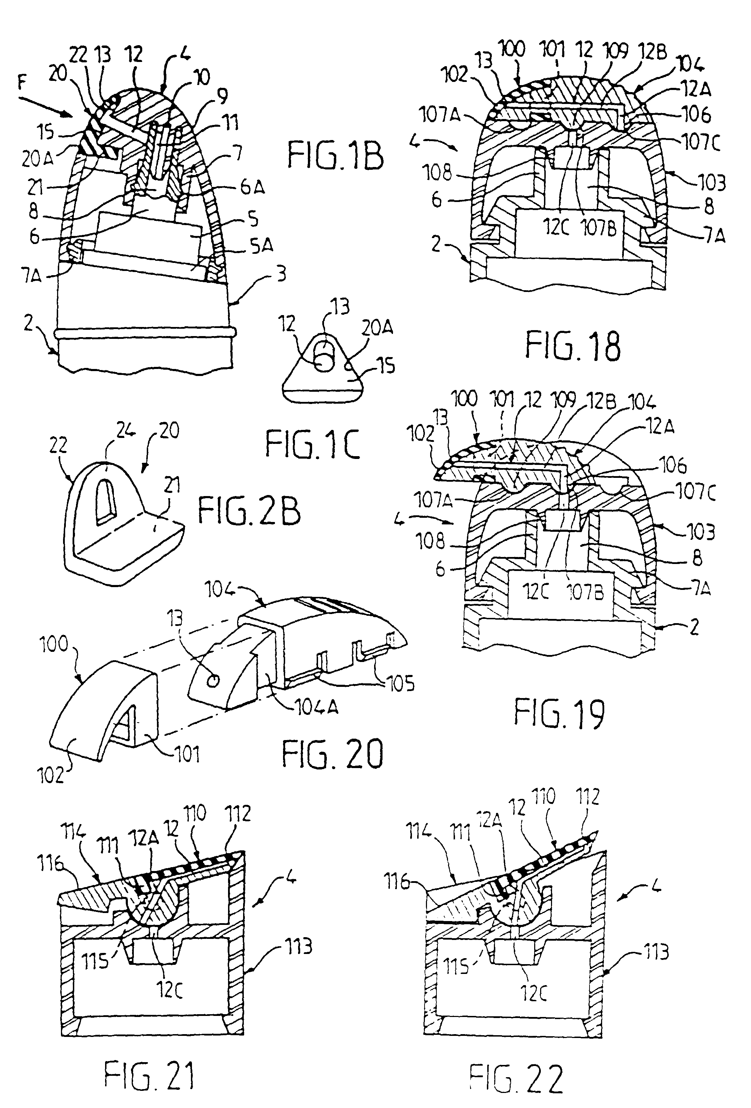

- la figure 18 est une vue en coupe partielle d'une autre variante de tête de distribution en position de fermeture ;
- la figure 19 est analogue à la figure 18, la tête de distribution étant en position d'ouverture ;
- la figure 20 est une vue partielle, en perspective éclatée, de la tête de distribution selon les figures 18 et 19 ;
- la figure 21 est une vue partielle d'une autre variante de tête de distribution en position de fermeture ;

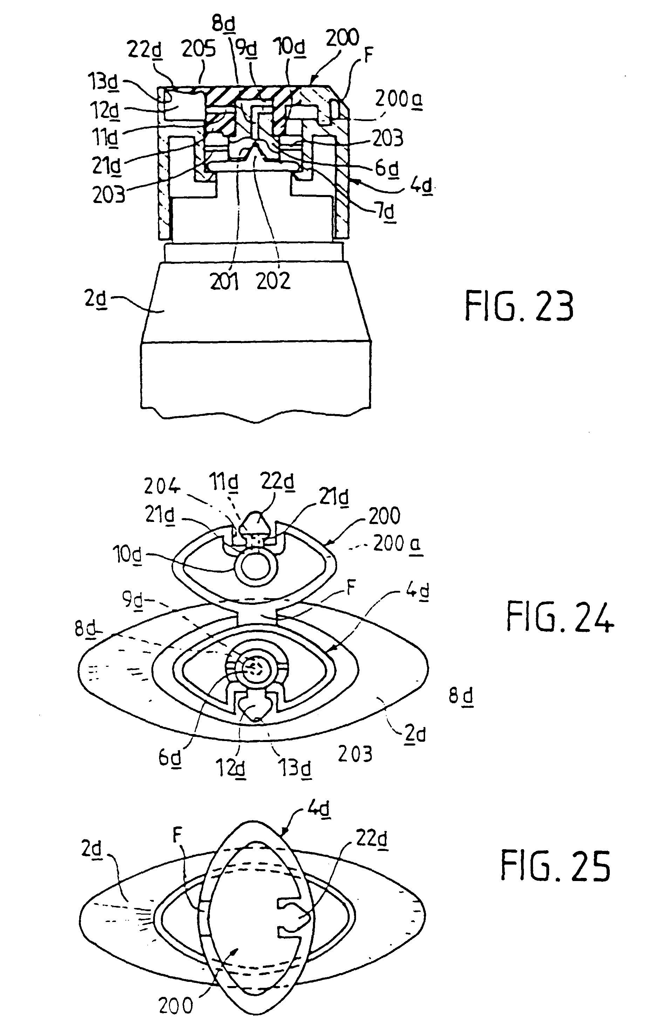

- la figure 22 est analogue à la figure 21, la tête de distribution étant en position d'ouverture.
- la figure 23 montre en coupe verticale axiale, avec parties en extérieur, une variante de tête de distribution moulée d'une seule pièce en bi-matière ;
- la figure 24 est une vue de dessus, relativement à la figure 23, de la tête de distribution couvercle ouvert ;
- la figure 25 est une vue de dessus de la tête de la figure 23, couvercle rabattu, au cours de sa rotation entre la position fermée et la position ouverte ;

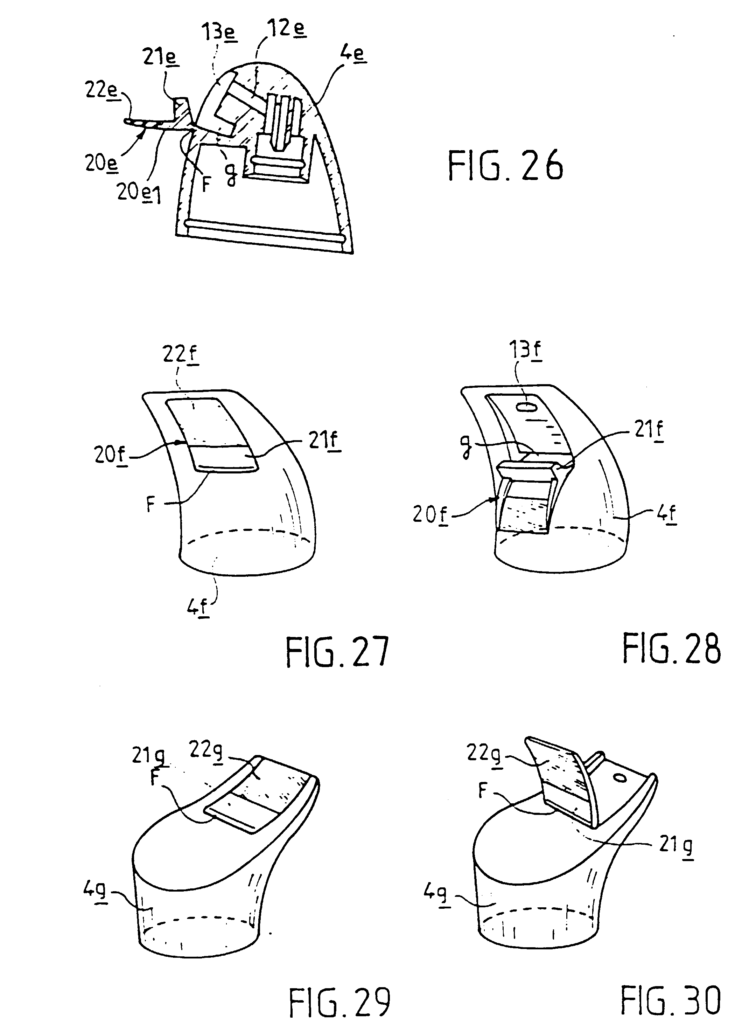

- la figure 26 est une vue schématique en coupe axiale verticale d'une variante de la tête de la figure 1, moulée d'une seule pièce ;
- les figures 27 et 28 illustrent schématiquement, en perspective, une autre variante de réalisation de la tête, moulée d'une seule pièce ;
- les figures 29 et 30 montrent, également en perspective, une autre variante de réalisation de la tête de distribution.

En se reportant à la figure 1, un ensemble de distribution comporte un récipient 2, contenant le produit à distribuer, de forme générale cylindrique à section non circulaire, par exemple elliptique ; à la partie supérieure du récipient est solidarisé, par exemple par claquage, un support 3 dont la partie inférieure épouse la forme du récipient 2 et dont la partie supérieure est prolongée selon un col 5 raccordé par une base 5A, le col 5 et la base 5A étant de sections circulaires, la section de la base 5A étant légèrement supérieure à celle du col 5 ; l'axe commun à la base 5A et au col 5 étant légèrement incliné par rapport à l'axe longitudinal du récipient 2 et de la partie inférieure du support 3, celle-ci se raccorde à la base 5A selon un plan perpendiculaire au plan de la figure 1 faisant un angle avec un plan perpendiculaire à l'axe du récipient 2.

Le col 5 se prolonge lui-même selon un conduit 6 de même axe, de forme cylindrique à section circulaire définissant un passage 8 axial ; le récipient 2 est en matière plastique relativement souple ; intérieurement, le récipient 2 et le support 3 sont agencés en sorte que le passage 8 est en communication avec l'intérieur du récipient 2 : ainsi, en comprimant le récipient 2, manuellement, il est possible de pousser le produit contenu dans le récipient 2 à travers le passage 8.

L'ensemble de distribution est coiffé d'une tête de distribution 4 ; plus précisément, celle-ci est en forme de pièce creuse présentant à l'intérieur un logement venant coiffer te conduit 6 ; à l'intérieur de ce logement, un embout creux 10 vient se loger dans le passage 8 du conduit 6 ; le volume intérieur dudit logement communique avec un canal de distribution 12, lui-même communiquant avec un orifice de distribution 13 pour la distribution du produit vers l'extérieur ; le canal de distribution 12 et l'orifice de distribution 13 sont également visibles sur la figure 1A.

La tête 4 présente un collet 7 entourant le conduit 6 qui présente extérieurement une nervure annulaire 6A qui est claquée dans une rainure correspondante prévue à la surface intérieure du collet 7 ; ainsi, la tête 4 est maintenue axialement par rapport au col 5 et au récipient 2 tout en pouvant tourner par rapport à eux ; le guidage en rotation de la tête 4 est en plus assuré par un anneau de guidage 7A rapporté à l'intérieur de la partie inférieure de la tête 4 et qui coopère en frottement avec la paroi extérieure de la base 5A du col 5.

Le canal de distribution 12 communique ou non avec le passage 8 en fonction de la position, en rotation, de la tête 4 par rapport au conduit 6 : l'embout creux 10 présente une échancrure longitudinale 11, et le conduit 6, à son extrémité supérieure, une échancrure longitudinale 9 ; dans la position représentée sur la figure 1, les échancrures 11 et 9 ne sont pas en face l'une de l'autre mais à 180 ° l'une de l'autre et la communication entre le canal de distribution 12 et le passage 8 est donc fermée ; dans cette position également, la tête 4 prolonge de manière centrée extérieurement le récipient 2 et le support 3 ; en faisant tourner de 180° la tête 4 par rapport au support 3 et au récipient 2, à partir de la position représentée sur la figure 1, les échancrures 11 et 9 se retrouvent en face l'une de l'autre et ladite communication est établie ; on notera qu'alors la tête 4 se trouvera inclinée par rapport à l'axe du récipient 2, grâce à l'inclinaison de la base 5A avec laquelle elle coopère, ce qui rend facile la distribution pour l'utilisateur.

L'orifice de distribution 13 est obturé par un organe de fermeture 20 unidirectionnel ; l'organe de fermeture 20 est réalisé en un matériau élastique ; comme cela est mieux visible sur la figure 2, l'organe de fermeture 20 présente une lame élastique 22 et un talon 21, de fixation et mise en contrainte de la lame 22, de forme générale parallélépipèdique ; selon cette réalisation, le talon 21 s'étend approximativement perpendiculairement au plan dans lequel s'étend la lame élastique 22 ; l'organe de fermeture 20 est conçu de telle sorte qu'il permette une reprise d'air ; à cet effet, la lame 22 présente une face intérieure 23, près du talon 21, destinée à coopérer avec le siège 15 porté par la tête de distribution 4 et, à son extrémité extrême, une face intérieure extrême 24 légèrement décalée vers l'extérieur et au droit de laquelle est situé l'orifice 13 de distribution bordé par le siège 15 ; ainsi, l'orifice n'est pas obstrué complètement, la face intérieure extrême 24 étant légèrement à distance de celui-ci.

La lame élastique 22 et le talon 21 sont, en quelque sorte, situés respectivement sur les faces d'un dièdre dont l'arête correspond à la liaison entre lame et talon. Au voisinage de l'extrémité de la lame 22 assurant la fermeture, l'étendue angulaire de cette lame, suivant une circonférence centrée sur l'axe du récipient 2, est réduite.

Le talon 21 de l'organe de fermeture 20 est emmanché à force dans un logement prévu dans la tête de distribution 4 pour le recevoir ; ce logement s'étend transversalement à partir d'une feuillure 20A recevant la lame 22, dont le contour épouse donc la forme du contour de ladite lame et dont le fond constitue le siège 15 ; la réalisation d'une seule pièce de l'organe de fermeture 20, avec sa lame 22 et son talon 21, permet de maintenir la lame élastique 22 appliquée sur son siège 15 par sa face intérieure 23 ; dans cette réalisation, le talon 21 ayant la même largeur que la base de la lame 22 par laquelle celle-ci est raccordée au talon 21, de bons résultats quant au maintien de la lame 22 appliquée sur son siège ont été obtenus avec une épaisseur de talon 21 égale au double de l'épaisseur de la lame 22, qui étaient respectivement de 2 mm et 1 mm, la hauteur du talon 21 étant de l'ordre de 5 fois l'épaisseur de la lame 22, soit 5 mm, la lame 22 ayant une hauteur totale de 10 mm.

La mise en place du talon 21 dans le logement de la tête de distribution 4 est prévue de manière à créer une contrainte de flexion sur au moins une partie de la lame 22, qui s'applique ainsi élastiquement contre le siège 15.

Avantageusement, la lame 22 au moins au niveau de son extrémité assurant la fermeture, est enchâssée dans un évidement de forme correspondante de la paroi de la tête 4, de manière à former, au repos, une surface continue, lisse, avec la surface extérieure de la tête 4. Ainsi, au repos, en position fermée, la lame 22, au moins à son extrémité assurant la fermeture ne déborde pas de la surface extérieure de la tête 4.

On comprendra que, en ce qui concerne les variantes décrites dans la présente demande, elles peuvent toutes être agencées en sorte d'assurer ou non une reprise d'air ; ainsi, pour que la variante des figures 1 et 2 soit adaptée à un ensemble de distribution sans reprise d'air, il suffit que les faces intérieures 23 et 24 de la lame 22 soient dans un même plan, le plan de maintien de la lame 22 sur son siège 15 portant l'orifice de distribution 13 ; une telle réalisation est montrée sur les figures 1B, 1C, 2B qui sont respectivement analogues aux figures 1, 1A, 2 décrites précédemment ; on voit, selon cette variante sans reprise d'air des figures 1B, 1C, 2B, que la lame 22 par sa face 24 coopère avec le siège 15 tout autour de l'orifice de distribution 13 ; visible sur la figure 2B, une creusure borgne est ménagée sur la face 24 de la lame 22 au droit de l'orifice de distribution 13 dont elle a la forme : ceci évite le marquage de la lame par la bordure de l'orifice 13 et permet une excellente étanchéité de fermeture ; une telle disposition peut, bien entendu, être appliquée aux variantes qui suivent.

L'organe de fermeture 20 peut également être conformé en sorte qu'il coopère avec deux orifices de distribution comme montré sur la figure 7 ; sur cette figure, le récipient 2 comprend deux compartiments 2A, 2B délimités par une cloison de séparation 2C ; chaque compartiment 2A, 2B est associé à un passage de distribution, respectivement 10A, 10B conduisant chacun des produits contenus dans les compartiments 2A, 2B vers les orifices de distribution 13A, 13B fermés au repos par l'organe de fermeture 20.

Les autres figures représentant d'autres variantes portent, pour simplifier, des références identiques à celles des figures 1 et 2 pour des organes jouant le même rôle que ceux qui ont été décrits à propos de ces figures.

En se reportant aux figures 3 et 4, le support 3 porte une pompe ou une valve de distribution 14, classiques, dont le conduit 6 constitue la tige émergente qui porte la tête de distribution 4 constituant un bouton-poussoir ; l'organe de fermeture 30 comprend une lame élastique 32 et un talon de fixation 31.

Le talon 31 a une forme générale annulaire cylindrique ; la paroi cylindrique 33 du talon 31 est munie extérieurement de nervures longitudinales 36 permettant d'augmenter la surface extérieure du talon 31 pour assurer un bon encastrement du talon 31 dans la tête de distribution 4 ; une échancrure longitudinale 37 permet au talon 31 de chevaucher le canal de distribution 12 que comporte la tête de distribution 4 qui présente à sa partie supérieure un logement ouvert vers l'extérieur recevant l'organe de fermeture 30, ce logement ayant une forme complémentaire de celle de l'organe de fermeture 30 ; selon la forme de réalisation représentée, l'axe du talon 31 et le plan dans lequel s'étend la lame élastique 32 forment un angle entre eux différent de 90°, de l'ordre de 110°; la lame 32, en forme générale d'une goutte d'eau vue en coupe, déborde tout autour du talon 31 en sorte que sont définies non seulement une partie avant 34 qui coopère directement avec le siège 15 mais également une partie arrière 35, par rapport au talon 31, en appui sur la tête de distribution 4, qui vient conforter l'action du talon 31 dans son action de mise en contrainte de la lame 32 sur le siège 15. De bons résultats ont été obtenus avec un talon de longueur moyenne 10 mm, la surface cylindrique 33 ayant un diamètre de 8 mm, la longueur de la lame 32 étant de 25 mm et sa largeur maximale de 16 mm, l'axe du talon 31 faisant un angle de l'ordre de 20° avec le plan dans lequel la lame élastique 32 s'étend.

L'organe de fermeture 40 de la figure 5 présente un talon 41 de forme générale parallélépipèdique situé à l'arrière par rapport à l'extrémité de la lame 42 qui coopère avec le siège 15 au droit de l'orifice de distribution 13 ; le talon 41 comporte un ergot 43 longiligne d'accrochage sur une paroi de la tête de distribution 4 ; l'action du talon 41 est en outre confortée par l'emmanchement d'un logement 44, que présente l'organe de fermeture 40, sur un téton correspondant porté par la tête de distribution 4. L'extrémité de la lame 42 proche de l'orifice 13 s'étend selon une direction qui fait un angle de l'ordre de 70° avec la direction du talon 41. En variante, comme montré sur la figure 13, la partie arrière 45 de la lame 42 de l'organe de fermeture 40 se prolonge au delà du talon 41 ; l'appui et l'encastrement sur la paroi de la tête de distribution 4 de cette partie arrière 45 vient conforter le rôle d'organe de contrainte joué par le talon 41.

Selon les variantes des figures 6, 8, 9 et 10, l'organe de fermeture 50 présente un talon en deux pièces 51A, 51B, de forme généralement parallélépipèdique, comportant chacune un ergot 53A, 53B longiligne d'accrochage comme l'organe de fermeture 50 de la figure 5 ; toutefois, au lieu d'être placé transversalement à l'arrière de la lame 52, le talon en deux pièces 51A, 51B s'étend parallèlement à l'axe longitudinal de la lame 52, de chaque côté de celle-ci ; selon la figure 6, le talon 51A, 51B est proche de la zone arrière de la lame 52 en forme de bec de canard, tandis que, selon la figure 8, le talon 51A, 51B est proche de la zone médiane de la lame 52 de forme trapézoïdale ; selon la figure 10, une traverse de renforcement 51C transversale relie sur une partie de leur hauteur proche de la lame 52 les deux pièces 51A, 51B ; l'encastrement de l'organe de fermeture 50 dans la tête de distribution s'en trouve renforcé et donc son rôle d'organe de contrainte de la lame élastique 52 ; pour cette variante, la figure 9 montre le soulèvement de la partie médiane de la lame 52, au droit de l'orifice 13 de distribution, lors de la distribution du produit traversant le canal de distribution 12 symbolisée par la flèche ascendante représentée sur cette figure. Les talons 51A, 51B de ces variantes s'étendent généralement perpendiculairement à la lame 52 ; une meilleure action de contrainte de la lame 52 est obtenue lorsque l'angle intérieur qu'ils forment avec la lame 52 est légèrement inférieur à 90° lorsque l'organe de fermeture 50 est au repos, cet angle étant de 90° lorsque l'organe 50 est monté sur la tête de distribution.

Selon les figures 11 et 12, la tête de distribution 4, en forme de bouton-poussoir pour la mise en oeuvre d'une pompe ou valve de distribution 14 portée par le support 3, comporte un organe de fermeture 60 dont le talon 61 est de forme cylindrique annulaire et encastré dans un logement de forme correspondante que présente la tête de distribution 4 ; selon la figure 11, la lame élastique 62 de l'organe de fermeture 60 présente trois portions 63, 64, 65 faisant un angle entre elles, l'une, la portion 64, coopérant avec le siège 15 et l'orifice de distribution 13 ; vues de l'extérieur, les portions 62, 63 forment un angle convexe, de l'ordre de 115°, tandis que les portions 63, 65 forment un angle concave, de l'ordre de 135°, la portion 63 portant intérieurement le talon 61, et les portions 64 et 65 étant placées de part et d'autre de la portion 63 ; de même que pour la variante des figures 3 et 4, la portion arrière 65 renforce l'action d'organe de contrainte du talon 61 à l'égard de la lame 62, plus précisément à l'égard de la portion 64. Selon la figure 12, la lame 62 a une forme générale plane et seul le talon cylindrique annulaire 61 procure l'action de contrainte, l'axe du talon 61 faisant un angle de l'ordre de 90° avec la partie de la lame 62 à laquelle il est raccordé et de l'ordre de 45° avec l'extrémité de la lame 62.

Selon la variante de la figure 14, l'organe de fermeture 80 présente deux talons de fixation : un talon 81 de forme parallélépipèdique muni d'un ergot longiligne d'accrochage 83 et un talon 81A en forme de pion cylindrique, reçus tous deux dans un logement correspondant de la tête de distribution 4. En outre, selon cette variante, la lame 82 s'étend au repos, position montrée sur la figure 14, dans un plan qui fait un angle, par exemple d'une vingtaine de degrés, avec un plan perpendiculaire à celui selon lequel s'étend le talon 81-81A supérieur à l'angle que font ces mêmes plans lorsque l'organe de fermeture 80 est en place, en étant fixé sur la tête de distribution 4, ledit angle étant alors, par exemple, réduit de moitié et conservé, après montage, grâce à l'agrafage de l'organe 80 sur la tête 4 par l'ergot d'accrochage 83 du talon 81 ; cette disposition présente l'avantage qu'à l'action "naturelle" de mise en contrainte de la lame 80 par le talon 81-81A s'ajoute une action de mise en compression de la lame 82 sur le siège 15, ceci conduisant à une plus grande efficacité de la fermeture de l'orifice de distribution 13. Cette efficacité peut encore être augmentée en dotant la lame 82 d'une partie arrière 85 appliquée également en compression, après montage, sur la paroi externe de la tête 4, comme le montre la figure 15.

En se reportant aux figures 16 et 17, on voit un ensemble de distribution comportant un récipient 2 en un matériau relativement souple ; le col 5 et le conduit 6, de section circulaire, sont réalisés d'une seule pièce avec le récipient 2 dont la section peut être quelconque, le conduit 6 constituant un goulot pour le récipient 2 ; la tête de distribution 4 présente, outre l'embout creux 10, muni de son échancrure longitudinale 11, comme cela a été décrit à propos de la figure 1, une jupe cylindrique externe 4A de section circulaire coopérant, à sa partie inférieure, en guidage avec le col 5 ; le col 5 est muni d'une échancrure de débattement 18 dans laquelle prend place un téton radial 17 que porte intérieurement à sa partie inférieure la jupe externe 4A ; ainsi, la tête de distribution 4 peut tourner, par rapport au récipient 2, dans la limite du débattement du téton radial 17 dans l'échancrure de débattement 18 ; la stabilité des positions extrêmes dudit téton 17 dans ladite échancrure 18 est assurée par des pions de positionnement 19D, 19G que doit passer le téton radial 17, en mettant à profit l'élasticité de la matière plastique dont est constituée la tête de distribution 4.

La tête de distribution 4 présente également, disposées radialement entre la jupe externe 4A et l'embout creux 10, une jupe de maintien 4B et une jupe interne 4C, cylindriques, de section circulaire, et coaxiales. L'extrémité inférieure de la jupe de maintien 4B est clipsée sur une collerette de clipsage 16 circulaire solidaire du récipient 2 et placée axialement entre le col 5 et le conduit 6 ; le diamètre de la collerette 16 a une valeur intermédiaire entre les valeurs des diamètres du col 5 et du conduit 6. L'embout creux 10 et la jupe interne 4C ont des diamètres tels qu'ils constituent un espace annulaire dans lequel prend place le conduit 6 de manière étanche ; le canal de distribution 12 communique, d'un côté, avec cet espace annulaire, au droit de l'échancrure 11 de l'embout 10, et, de l'autre côté, avec l'extérieur ; pour l'une des positions extrêmes, décrites ci-dessus, de la tête 4 par rapport au récipient 2, les échancrures 9 et 11 et l'extrémité intérieure du canal de distribution 12 sont au droit les unes des autres : dans cette position, représentée sur la figure 16, une pression manuelle sur le récipient 2 pousse le produit contenu dans le récipient 2 vers le canal de distribution 12 ; pour l'autre position extrême de la tête 4, c'est une partie pleine de la paroi du conduit 6 qui est entre le canal 12 et l'échancrure 11 et, dès lors, toute distribution est empêchée. Au droit de l'extrémité extérieure du canal 12 qui se termine selon l'orifice de distribution, est placée la lame 92 de l'organe de fermeture 90 dont le talon 91, du type parallélépipèdique, est encastré dans un logement correspondant de la tête 4 ; l'organe de fermeture 90 est du même genre que celui de l'organe de fermeture 20 décrit à propos des figures 1 et 2 ; toutefois, l'organe de fermeture 90 présente une lame 92 qui s'étend dans un plan faisant un angle obtus avec le talon 91, de l'ordre de 130°. L'ensemble de distribution qui vient d'être décrit présente l'avantage d'être d'une réalisation simple : en effet, il ne comporte que trois pièces distinctes, à savoir un récipient 2, une tête de distribution 4 et un organe de fermeture 90.

Comme on l'a vu à propos des variantes décrites jusqu'ici, en position de fermeture de l'ensemble de distribution au repos, le produit contenu dans le récipient est isolé de l'extérieur, d'une part, par le système de fermeture situé à la partie terminale, s'ouvrant vers l'extérieur, du canal de distribution et, d'autre part, grâce à la fermeture de la communication entre le canal de distribution 12 et le récipient 2 : la fermeture de ladite communication est obtenue par le montage de la tête de distribution 4 qui est mobile, par rapport au récipient 2, soit par rotation (figures 1 et 16, par exemple), soit en translation (figures 3, 11 et 12, par exemple).

Bien entendu, il est possible d'obtenir ce même résultat quel que soit le montage de la tête de distribution 4 sur le récipient 2, de manière fixe ou mobile.

En se reportant aux figures 18, 19 et 20, un ensemble de distribution selon l'invention comprend une tête de distribution 4 claquée sur le récipient 2 grâce à l'anneau 7A porté par celui-ci, des moyens non représentés pouvant être prévus pour empêcher la tête de distribution 4 de tourner par rapport au récipient 2.

La tête de distribution 4 comprend deux parties : un support 103 par lequel la tête de distribution 4 est montée sur le récipient 2, et un organe mobile 104 claqué à la partie supérieure du support 103 sur lequel il est maintenu par des pattes de claquage 105 longitudinales placées de chaque côté de l'organe mobile 104 et coopérant avec des rails parallèles disposés de part et d'autre du support 103 ; ainsi, l'organe mobile 104 est monté coulissant par rapport au support 103 ; lorsque le support 103 est monté sur le récipient 2, une lèvre annulaire 108 du support coopère avec le bord du conduit 6 qui prolonge le col 5 du récipient 2, et assure l'étanchéité du montage ; la paroi supérieure du support 103 est percée d'un passage 12C au droit du passage 8 du conduit 6 ; l'organe mobile 104, qui constitue la partie supérieure de la tête de distribution 4, est traversé par un canal de distribution 12 en forme de **L** ayant une partie transversale 12B dont l'extrémité qui débouche à l'extérieur porte l'orifice de distribution 13, et une partie axiale 12A qui débouche à la partie inférieure de l'organe mobile 104, au droit et au centre d'un téton semi-sphérique 106 ; au centre de sa partie inférieure, l'organe mobile 104 porte un autre téton 109, analogue au téton 106 ; à la partie supérieure du support 103, sont creusés des alvéoles, également semi-sphériques, 107A, 107B, 107C, de forme complémentaire à celle des tétons 106, 109 ; l'alvéole 107B est au centre, entourant le passage 12C, et placé à égale distance des alvéoles 107A, 107C, distance qui est égale à celle qui sépare les tétons 106, 109 ; les tétons 106, 109 jouent le rôle de pions de positionnement, mettant à profit l'élasticité de la matière plastique dont sont constitués le support 103 et l'organe mobile 104 ; ils assurent à l'organe mobile deux positions stables, par rapport au support 103, lorsqu'il est déplacé en translation par rapport à lui : pour une position, représentée sur la Figure 18, les tétons 106 et 109 coopèrent avec les alvéoles, respectivement, 107C et 107B ; dans cette position, dite de fermeture, la partie axiale 12A du canal de distribution 12 est au droit d'une partie pleine du support 103 ; pour l'autre position de l'organe mobile 104, représentée Figure 19, les tétons 106 et 109 coopèrent avec les alvéoles, respectivement, 107B et 107A ; dans cette position, dite d'ouverture, la partie axiale 12A du canal de distribution 12 est au droit du passage 12C.

A son extrémité voisine de l'orifice de distribution 13, l'organe mobile 104 porte l'organe de fermeture 100 constitué d'une lame élastique 102 et d'un talon 101 ; selon cette variante, le talon 101 est de forme annulaire et entoure l'extrémité de l'organe mobile 104, en prenant place dans une rainure 104A, également annulaire.

La variante de tête de distribution 4 représentée sur les figures 21 et 22 est du genre de celle qui vient d'être décrite ; la tête de distribution 4 comprend deux parties : un support 113 par lequel la tête de distribution 4 est montée sur le récipient, et un organe mobile 114 ; selon cette variante, l'organe mobile 114 est monté à rotation sur le support 113, grâce à deux demi-axes 115 qu'il porte latéralement ; la partie 12A du canal de distribution 12, faisant un angle oblique par rapport à la partie supérieure de l'organe mobile 114, a sa partie inférieure qui est, ou qui n'est pas, au droit du passage 12C en fonction de la position de l'organe mobile 114 par rapport au support 113 ; dans une position, dite de fermeture, représentée sur la figure 21, la partie 12A du canal de distribution 12 est au droit d'une paroi pleine du support 113 ; dans l'autre position, obtenue par action sur la partie arrière 116 de l'organe mobile 114, dite "d'ouverture", ladite partie 12A est au droit du passage 12C ; l'organe mobile 114 porte un organe de fermeture 110, du genre de celui décrit à propos de la figure 16, ayant une lame élastique 112 et un talon 111 ; on notera qu'en position de fermeture, l'extrémité de l'organe mobile 114 voisine de la lame 112 est complètement escamotée et protégée par l'enveloppe extérieure du support 113.

Pour toutes les variantes d'ensemble de distribution selon l'invention, l'organe de fermeture est rapporté sur la tête de distribution ; cette opération peut être, bien entendu, réalisée manuellement, mais aussi automatiquement, par exemple lors de l'opération de moulage de la tête de distribution, par exemple en effectuant un moulage de deux matières en même temps, ou moulage bi-matière, ou successivement par surmoulage, en choisissant des matières n'ayant pas d'affinité physico-chimiques permettant le libre fonctionnement de la lame élastique par rapport au siège avec lequel elle coopère.

Les figures 23 à 25 montrent une tête de distribution 4d moulée d'une seule pièce, qui est réalisée en bi-matière, avantageusement avec des pattes autocassables permettant d'assurer une inviolabilité avant premier usage. Cette tête 4d, en variante, peut être réalisée en monomatière.

Les différents éléments de la tête de distribution des figures 23 à 25, semblables ou jouant un rôle analogue à des éléments déjà décrits à propos de la figure 1, sont désignés par les mêmes références numériques suivies de la lettre d. Leur description ne sera pas reprise ou ne sera effectuée que succinctement.

La capsule 4d forme une seule pièce avec un couvercle 200, relié par au moins une charnière film F à la paroi latérale de la tête de distribution 4d.

Dans le mode de réalisation particulier illustré sur les dessins, la tête 4d est bordée par une jupe cylindrique à section transversale ovale. La tête 4d est solidaire d'un collet intérieur 7d propre à venir se fixer par encliquetage sur un rebord du goulot du récipient 2d.

Un conduit 6d, coaxial au collet 7d, est situé radialement à l'intérieur de ce dernier, ce conduit 6d comportant, à l'intérieur, le passage 8d pour le produit. La base du conduit 6d comporte une ou plusieurs échancrures 201 propres à venir coiffer des organes de blocage complémentaires 202 prévus sur le col du récipient 2d, pour arrêter en rotation le conduit 6d relativement au récipient 2d.

Le conduit 6d est relié à la paroi interne du collet 7d par des pattes radiales 203 autocassables, régulièrement réparties.

Le couvercle 200, situé à la partie supérieure de la tête 4d, a une forme, ovale dans l'exemple représenté, correspondant à celle de la section transversale de la tête 4d.

Une jupe périphérique 200a est prévue en saillie sous le couvercle 200 pour coopérer avec un logement conjugué de la tête 4d et maintenir le couvercle dans sa position rabattue de la figure 23.

Le couvercle 200 comporte, en saillie au centre de sa face inférieure, un embout creux 10d muni d'un canal longitudinal 11d traversant sa paroi. Lorsque le couvercle 200 est rabattu sur la tête 4d, comme illustré sur la figure 23, l'embout 10d coiffe de manière étanche l'extrémité supérieure du conduit 6d. Le passage 8d débouche, vers l'extérieur, par un canal longitudinal 9d, à angle droit du passage 8d. Le canal 9d peut être mis en regard du canal 11d, ou être diamétralement opposé comme illustré sur la figure 23, par un mouvement de rotation de la tête 4d.

Cette tête 4d comporte un canal de distribution 12d s'étendant radialement suivant un demi petit axe de la section ovale transversale, entre la paroi externe du conduit 6d et un orifice de distribution 13d.

Le couvercle 200 comporte une lame élastique 22d située au droit de l'orifice de distribution 13d pour en assurer la fermeture. Cette lame élastique 22d est située dans une échancrure 204 prévue à une extrémité du petit axe du couvercle 200. La languette 22d est reliée, à sa partie arrière, par une charnière 205 à une partie du couvercle constituant le talon 21d. Ce talon comprend, de préférence, une partie en saillie vers le bas reçue dans un logement compris entre la paroi externe du conduit 6d et la paroi 7d. Le cas échéant, le talon 21d peut englober une partie de l'embout 10d située à l'opposé de la partie 21d.

La capsule 4d, avec son couvercle 200, en une seule pièce, peut être moulée, en position couvercle ouvert comme illustrée sur la figure 24, en monomatière. Avantageusement, la tête 4d est moulée en bi-matière, par exemple en polypropylène pour la tête 4d et la partie du couvercle 200 située à l'opposé de la languette 22d, tandis que l'ensemble de la languette 22d du talon 21d et de l'embout 10d est réalisé en matière élastomère, surinjectée sur la partie en polypropylène du couvercle 200.

Le fonctionnement de la tête de distribution 4d des figures 23 à 25 résulte immédiatement des explications qui précèdent.

Au stockage, le couvercle 200, comme illustré sur la figure 23, rabattu sur la tête 4d, se trouve dans une position angulaire relativement au conduit 6d, telle que les canaux longitudinaux 11d, 9d soient diamétralement opposés. La sortie du produit est ainsi fermée. Les pattes d'inviolabilité 203 assurent une liaison entre le conduit 6d et la jupe de la tête 4d.

Lors de la mise en service, l'utilisateur doit faire tourner de 180° la tête 4d autour de l'axe du récipient, de manière à briser les pattes autocassables 203 et à amener dans le prolongement l'un de l'autre les canaux longitudinaux 9d et 11d. Ce mouvement est illustré sur la figure 25 qui représente le couvercle 200 sensiblement en position mi-course. Il est à noter que lors de ce mouvement, le conduit 6d reste immobile relativement au flacon 2d puisqu'il est arrêté par la coopération des éléments 201, 202.

Lorsque le mouvement de rotation de 180° du couvercle 200 est terminé, le dispositif est prêt à l'emploi et une pression exercée sur les parois du récipient 2d provoque la sortie du produit à travers les canaux 9d, 11d, le passage 12d et l'orifice de distribution 13d, avec léger soulèvement de la languette 22d. Lorsque la pression sur les parois du récipient 2d cesse, la languette 22d reprend sa position de fermeture sous la contrainte exercée par le talon 21d.

La figure 26 illustre une variante de réalisation 4e de la tête de distribution de la figure 1, variante selon laquelle l'organe de fermeture 20e est moulé d'une seule pièce avec la tête 4e. La partie 20e1 de l'organe de fermeture, voisine de la tête 4e, partie qui comprend le talon 21e peut être réalisée dans la même matière que la tête 4e, par exemple en polypropylène ; elle est reliée à la paroi de la tête 4e par une charnière film F. Le moulage est réalisé dans la position totalement ouverte illustrée sur la figure 26 de sorte qu'après démoulage, il convient de placer l'organe 20e dans sa position de travail en le faisant tourner dans le sens l'horloge, selon la figure 26, pour amener le talon 21e en prise dans un logement g de la tête 4e. La partie de l'organe 20e, la plus éloignée de la charnière F constitue la lame élastique 22e. Avantageusement, cette lame 22e est réalisée en une matière élastomère ou plus généralement en matière élastique, surinjectée sur la partie arrière 20e1. La lame élastique 22e peut être réalisée en d'autres matières qu'élastomère, par exemple, en thermoplastique ou en une matière connue sous le nom commercial de PROFAX®.

Les figures 27 et 28 illustrent une autre variante de réalisation. La tête de distribution 4f est en forme de bec et présente une face à orientation verticale sur laquelle est prévu l'organe de fermeture 20f à contour rectangulaire. Cet organe de fermeture est moulé d'une seule pièce en position ouverte avec la tête 4f à laquelle il est relié par une charnière film F. Au démoulage le talon 21f se trouve hors du logement g prévu dans la tête 4f pour le recevoir, comme illustré sur la figure 28. En rabattant l'organe de fermeture 20f contre la face de la tête 4f, on obtient la configuration de la figure 27 qui assure le fonctionnement correct de la tête 4f. L'orifice de sortie 13f pour le produit (voir figure 28) se trouve au voisinage du bord supérieur de la tête 4f, à mi-largeur. Cet orifice 13f est recouvert lorsque l'organe de fermeture 20f est rabattu comme illustré sur la figure 27. La partie arrière 21f de l'organe 20f peut être réalisée dans la même matière que la tête 4f à laquelle elle est reliée par la charnière F, tandis que la lame élastique 22f est réalisée en une matière élastique surinjectée.

Les figures 29 et 30 illustrent une variante de réalisation de la tête de distribution 4g dont l'organe de fermeture 22g est semblable à celui des figures 27 et 28. Cependant, la paroi supérieure de la tête 4g est sensiblement horizontale et l'organe de fermeture 22g se trouve sensiblement dans un plan horizontal en position de travail, alors que dans le cas de la figure 27, l'organe de fermeture 20f, en position de travail, est situé sensiblement dans un plan vertical.

## Revendications

1. Ensemble de distribution d'un produit fluide qui comporte un récipient (2) et une tête de distribution (4) munie d'un canal de distribution (12) qui s'ouvre sur l'extérieur, un système de fermeture étant situé à celle des extrémités du canal de distribution qui s'ouvre sur l'extérieur, ledit système de fermeture étant formé, d'une part, d'un siège (15) qui fait partie d'une pièce de la tête de distribution (4), et, d'autre part, de la lame flexible (22, 32, 42, 52, 62, 82, 92, 102, 112, 22d, 22e, 22f, 22g) d'un organe de fermeture (20, 30, 40, 50, 60, 80, 90, 100,110) réalisé en matériau flexible, ladite lame flexible ayant un plan longitudinal médian de symétrie, ledit organe de fermeture comportant d'une part, ladite lame flexible et, d'autre part, un organe de contrainte constitué par un talon (21, 31, 41, 51A, 51B, 61, 81-81A, 91, 101, 111) fixé sur la tête de distribution (4), ledit talon comportant un plan moyen qui est perpendiculaire au plan longitudinal médian de symétrie de la lame flexible et qui renferme le centre de gravité du talon, la lame flexible ayant dans son plan longitudinal médian de symétrie, une ligne médiane qui, au voisinage du talon, est sensiblement rectiligne, la ligne médiane de la lame flexible au voisinage du talon formant un angle avec un plan parallèle au plan moyen du talon, ladite lame flexible coopérant avec le siège (15) pour, lorsqu'il n'y a pas de distribution, obturer de façon étanche ou non l'extrémité ouverte du canal de distribution (12), et s'écartant au moins partiellement dudit siège (15) par flexion sous la pression du produit à distribuer et revenant par élasticité dans sa position initiale, lorsque cesse la distribution, sous l'action dudit organe de contrainte, le talon formant le seul organe de contrainte de la lame flexible qui a tendance à la ramener dans sa position initiale, caractérisé par le fait que la lame (22, 32, 42, 52, 62, 82, 92, 102, 112, 22d, 22e, 22f, 22g) est en matériau pouvant se déformer élastiquement, que le talon (21, 31, 41, 51A, 51B, 61, 81-81A, 91, 101, 111) constitue une zone de l'organe de fermeture dont l'épaisseur, dans sa zone de raccordement avec la lame en matériau pouvant se déformer élastiquement, est supérieure à celle de la lame flexible (22, 32, 42, 52, 62, 82, 92, 102, 112, 22d, 22e, 22f, 22g), l'épaisseur du talon (21, 31, 41, 51A, 51B, 61, 81-81A, 91, 101, 111) étant repérée, perpendiculairement au plan moyen du talon (21, 31, 41, 51A, 51B, 61, 81-81A, 91, 101, 111), sur la projection du talon (21, 31, 41, 51A, 51B, 61, 81-81A, 91, 101, 111) sur le plan longitudinal médian de symétrie de la lame flexible (22, 32, 42, 52, 62, 82, 92, 102, 112, 22d, 22e, 22f, 22g) alors que l'épaisseur de la lame flexible (22, 32, 42, 52, 62, 82, 92, 102, 112, 22d, 22e, 22f, 22g) est repérée, dans son plan longitudinal médian de symétrie, perpendiculairement à la ligne médiane de ladite lame flexible.

2. Ensemble de distribution selon la revendication 1, caractérisé par le fait que, la lame élastique (22, 32, 42, 52, 62, 82, 92, 102, 112, 22d, 22e, 22f, 22g) a une épaisseur et/ou une largeur moins importante à son extrémité opposée du talon (21, 31, 41, 51, 61, 81, 91, 101, 111).

3. Ensemble de distribution selon l'une des revendications 1 ou 2, caractérisé par le fait que la lame élastique (22, 32, 42, 52, 62, 82, 92, 102, 112, 22d, 22e, 22f, 22g) est enchâssée dans la paroi de la tête de distribution (4) au moins au niveau de son extrémité assurant la fermeture.

4. Ensemble de distribution selon l'une des revendications 1 à 3, caractérisé par le fait que le talon (41, 51A, 51B, 81, 91, 101, 111) est de forme générale parallélépipèdique.

5. Ensemble de distribution selon la revendication 4, caractérisé par le fait que le talon (41, 51A, 51B, 81) présente un ergot d'accrochage (43, 53A, 53B, 83) longiligne.

6. Ensemble de distribution selon l'une des revendications 1 à 3, caractérisé par le fait que le talon (31, 61, 81A) est de forme générale cylindrique.

7. Ensemble de distribution selon la revendication 6, caractérisé par le fait que le talon (31, 61, 101) est de forme annulaire.

8. Ensemble de distribution selon l'une des revendications 4 à 6, caractérisé par le fait que le talon est en deux pièces (51A-51B, 81-81A).

9. Ensemble de distribution selon l'une des revendications 1 à 8, caractérisé par le fait que le talon (21, 31, 41, 51A, 51B, 61, 81-81A, 91) est emmanché à force dans un logement correspondant de la tête de distribution (4).

10. Ensemble de distribution selon l'une des revendications 1 à 9, caractérisé par le fait que le talon (21, 51A, 51B, 61,) s'étend approximativement perpendiculairement au plan dans lequel s'étend la lame élastique (22, 52, 62, 72).

11. Ensemble de distribution selon l'une des revendications 1 à 9, caractérisé par le fait que le talon (31, 41, 81-81A, 101, 111) et le plan dans lequel s'étend la lame élastique (32, 42, 82, 102, 112) forment un angle entre eux différent de 90°.

12. Ensemble de distribution selon l'une des revendications 1 à 11, caractérisé par le fait que le talon (41, 61, 81, 101,111) est placé transversalement par rapport à la lame (42, 62, 82, 102, 112), à l'arrière de celle-ci.

13. Ensemble de distribution selon l'une des revendications 1 à 11, caractérisé par le fait que le talon (51A-51B) s'étend parallèlement à l'axe longitudinal de la lame (52), de chaque côté de celle-ci.

14. Ensemble de distribution selon la revendication 13, caractérisé par le fait que le talon (51A, 51B) est proche de la zone arrière de la lame (52).

15. Ensemble de distribution selon la revendication 13, caractérisé par le fait qu'une traverse de renforcement (51C) relie sur une partie de leur hauteur proche de la lame (52) les deux pièces (51A, 51B) constituant le talon.

16. Ensemble de distribution selon la revendication 13, caractérisé par le fait que le talon (51A, 51B) est proche de la zone médiane de la lame (52).

17. Ensemble de distribution selon l'une des revendications 1 à 16, caractérisé par le fait que la lame élastique (62) présente trois portions (63, 64, 65) faisant deux à deux un angle entre elles.

18. Ensemble de distribution selon l'une des revendications 1 à 17, caractérisé par le fait que la lame élastique (22, 32, 42, 52, 62, 82, 92, 102, 112) ne ferme pas complètement la partie terminale du canal de distribution (12) en sorte qu'une reprise d'air est permise dans le récipient (2).

19. Ensemble de distribution selon l'une des revendications 1 à 16, caractérisé par le fait que la lame (32, 42, 62, 82) présente une partie arrière (35, 45, 65, 85) s'étendant au delà de sa zone de raccordement au talon (31, 41, 61, 81-81A), ladite partie arrière (35, 45, 65, 85) prenant appui sur une partie de la tête de distribution (4).

20. Ensemble de distribution selon la revendication 19, caractérisé par le fait que la partie arrière (85) est mise en compression après montage de l'organe de fermeture (80) sur la tête de distribution (4).

21. Ensemble de distribution selon l'une des revendications 1 à 20, caractérisé par le fait que la lame (82) s'étend au repos dans un plan qui fait un angle avec un plan perpendiculaire à celui selon lequel s'étend le talon (81-81A), ledit angle étant supérieur à celui que font ces mêmes plans lorsque l'organe de fermeture (80) est fixé sur la tête de distribution (4).

22. Ensemble de distribution selon l'une des revendications 1 à 21, caractérisé par le fait que le canal de distribution (12) est réalisé en partie à l'intérieur de l'organe de fermeture.

23. Ensemble de distribution selon l'une des revendications 1 à 22, caractérisé par le fait que la tête de distribution (4) qui porte l'organe de fermeture est montée sur le récipient (2) en étant mobile par rapport à lui.

24. Ensemble de distribution selon la revendication 23, caractérisé par le fait que la tête de distribution (4), qui porte l'organe de fermeture (90), présente une jupe cylindrique externe (4A), une jupe de maintien (4B) et une jupe interne (4C), cylindriques, coaxiales, de section circulaire, entourant un embout creux (10) muni d'une échancrure longitudinale (11), le récipient (2) portant un conduit (6) monté de manière étanche entre l'embout creux (10) et la jupe interne (4C), le conduit (6) étant muni d'une échancrure (11), le canal de distribution (12) débouchant à l'intérieur dans l'espace annulaire défini entre l'embout creux (10) et la jupe interne (4C) au droit de l'échancrure (11) de l'embout creux (10), la tête de distribution (4) étant ainsi montée à rotation sur le récipient (2).

25. Ensemble de distribution selon l'une des revendications 1 à 22, caractérisé par le fait que l'organe de fermeture (100, 110) et au moins une partie du canal de distribution (12) sont portés par un organe mobile (104, 114) monté sur la tête de distribution (4) et mobile par rapport à elle.

26. Ensemble de distribution selon la revendication 25, caractérisé par le fait que l'organe mobile (104) est déplaçable en translation par rapport à la tête de distribution (4).

27. Ensemble de distribution selon la revendication 25, caractérisé par le fait que l'organe mobile (114) est monté à rotation sur la tête de distribution (4).

28. Ensemble de distribution selon l'une des revendications 1 à 27, caractérisé par le fait que la tête de distribution (4) est montée par claquage.

29. Ensemble de distribution selon l'une des revendications 1 à 27, caractérisé par le fait que la tête de distribution (4) est montée par vissage.

30. Ensemble de distribution selon l'une des revendications 1 à 27, caractérisé par le fait que des moyens d'ouverture rapide à au moins une rampe permettent de désolidariser la tête de distribution (4) de l'ensemble de distribution.

31. Ensemble de distribution selon l'une des revendications 1 à 30, caractérisé par le fait que la tête de distribution (4d, 4e, 4f, 4g) est moulée d'une seule pièce avec une charnière-film (F) de liaison entre la paroi de la tête de distribution et une partie (10d, 20el, 21f, 21g) munie de la lame élastique (22d, 22e, 22f, 22g).

32. Ensemble de distribution selon la revendication 31, caractérisé par le fait que la tête de distribution (4d, 4e, 4f, 4g) est réalisée en bi-matière, la lame élastique (22d, 22e, 22f, 22g) étant réalisée en une matière surinjectée plus souple que la matière du corps de la tête de distribution.

## Patentansprüche

1. Spender für ein fließfähiges Produkt, der einen Behälter (2) und einen Abgabekopf (4) aufweist, der mit einem nach außen ausmündenden Abgabekanal (12) versehen ist, an dessen nach außen ausmündendem Ende ein Verschlußsystem angeordnet ist, das einerseits aus einem Sitz (15) besteht, der Teil eines Abgabekopfteils (4) bildet, und andererseits aus der flexiblen Zunge (22, 32, 42, 52, 62, 82, 92, 102, 112, 22d, 22e, 22f, 22g) eines aus einem flexiblen Werkstoff hergestellten Verschlußorgans (20, 30, 40, 50, 60, 80, 90, 100, 110), die eine Mittellängssymmetrieebene besitzt, wobei das Verschlußorgan einerseits diese flexible Zunge und andererseits ein Spannorgan aufweist, das aus einem an dem Abgabekopf (4) befestigten Fuß (21, 31, 41, 51A, 51B, 61, 81-81A, 91, 101, 111) besteht, der eine Mittelebene besitzt, die zur Mittellängssymmetrieebene der flexiblen Zunge senkrecht ist und den Schwerpunkt des Fußes enthält, wobei die flexible Zunge in ihrer Mittellängssymmetrieebene eine Mittellinie aufweist, die in Nähe des Fußes im wesentlichen geradlinig ist und in Nähe des Fußes mit einer zur Mittelebene des Fußes parallelen Ebene einen Winkel bildet, wobei die flexible Zunge mit dem Sitz (15) zusammenwirkt, um, wenn keine Abgabe stattfindet, das offene Ende des Abgabekanals (12) dicht oder nicht dicht zu verschließen, und sich zumindest partiell von diesem Sitz (15) durch Biegung unter dem Druck des abzugebenden Produkts abhebt und bei Aufhören der Abgabe unter der Wirkung des Spannorgans elastisch in ihre Ausgangsstellung zurückkehrt, wobei der Fuß das einzige Spannorgan der flexiblen Zunge bildet, das bestrebt ist, sie in ihre Ausgangsstellung zurückzubringen, dadurch gekennzeichnet, daß die Zunge (22, 32, 42, 52, 62, 82, 92, 102, 112, 22d, 22e, 22f, 22g) aus einem elastisch verformbaren Werkstoff besteht und daß der Fuß (21, 31, 41, 51A, 51B, 61, 81-81A, 91, 101, 111) einen Bereich des Verschlußorgans bildet, dessen Dicke in seinem Bereich des Anschlusses an die aus einem elastisch verformbarem Werkstoff bestehende Zunge größer als die der flexiblen Zunge (22, 32, 42, 52, 62, 82, 92, 102, 112, 22d, 22e, 22f, 22g) ist, wobei die Dicke des Fußes (21, 31, 41, 51A, 51B, 61, 81-81A, 91, 101, 111) senkrecht zu seiner Mittelebene auf seiner Projektion auf die Mittellängssymmetrieebene der flexiblen Zunge (22, 32, 42, 52, 62, 82, 92, 102, 112, 22d, 22e, 22f, 22g) gemessen wird, während die Dicke der flexiblen Zunge (22, 32, 42, 52, 62, 82, 92, 102, 112, 22d, 22e, 22f, 22g) in ihrer Mittellängssymmetrieebene senkrecht zu ihrer Mittellinie gemessen wird.

2. Spender nach Anspruch 1, dadurch gekennzeichnet, daß die elastische Zunge (22, 32, 42, 52, 62, 82, 92, 102, 112, 22d, 22e, 22f, 22g) eine Dicke und/oder eine Breite besitzt, die an ihrem dem Fuß (21, 31, 41, 51, 61, 81, 91, 101, 111) entgegengesetzten Ende weniger groß ist.

3. Spender nach einem der Ansprüche 1 oder 2, dadurch gekennzeichnet, daß die elastische Zunge (22, 32, 42, 52, 62, 82, 92, 102, 112, 22d, 22e, 22f, 22g) mindestens auf Höhe ihres den Verschluß gewährleistenden Endes in die Wand des Abgabekopfs eingelassen ist.

4. Spender nach einem der Ansprüche 1 bis 3, dadurch gekennzeichnet, daß der Fuß (41, 51A, 51B, 81, 91, 101, 111) allgemein parallelepipedförmig ist.

5. Spender nach Anspruch 4, dadurch gekennzeichnet, daß der Fuß (41, 51A, 51B, 81) eine langgestreckte Einhaknase (43, 53A, 53B, 83) aufweist.

6. Spender nach einem der Ansprüche 1 bis 3, dadurch gekennzeichnet, daß der Fuß (31, 61, 81A) allgemein zylindrisch ist.

7. Spender nach Anspruch 6, dadurch gekennzeichnet, daß der Fuß (31, 61, 101) ringförmig ist.

8. Spender nach einem der Ansprüche 4 bis 6, dadurch gekennzeichnet, daß der Fuß aus zwei Teilen (51A-51B, 81-81A) besteht.

9. Spender nach einem der Ansprüche 1 bis 8, dadurch gekennzeichnet, daß der Fuß (21, 31, 41, 51A, 51B, 61, 81-81A, 91) in eine entsprechende Aussparung des Abgabekopfs (4) eingepreßt ist.

10. Spender nach einem der Ansprüche 1 bis 9, dadurch gekennzeichnet, daß der Fuß (21, 51A, 51B, 61) sich annähernd senkrecht zu der Ebene erstreckt, in der die elastische Zunge (22, 52, 62, 72) liegt.

11. Spender nach einem der Ansprüche 1 bis 9, dadurch gekennzeichnet, daß der Fuß (31, 41, 81-81A, 101, 111) und die Ebene, in der sich die elastische Zunge (32, 42, 82, 102, 112) erstreckt, miteinander einen von 90° abweichenden Winkel bilden.

12. Spender nach einem der Ansprüche 1 bis 11, dadurch gekennzeichnet, daß der Fuß (41, 61, 81, 101, 111) quer zur Zunge (42, 62, 82, 102, 112) und in ihrem hinteren Bereich angeordnet ist.

13. Spender nach einem der Ansprüche 1 bis 11, dadurch gekennzeichnet, daß der Fuß (51A-51B) sich auf jeder Seite der Zunge (52) parallel zu ihrer Längsachse erstreckt.

14. Spender nach Anspruch 13, dadurch gekennzeichnet, daß der Fuß (51A, 51B) sich nahe dem hinteren Bereich der Zunge (52) befindet.

15. Spender nach Anspruch 13, dadurch gekennzeichnet, daß eine Verstärkungsstrebe (51C) die beiden den Fuß bildenden Teile (51A, 51B) auf einem der Zunge (52) nahen Teil ihrer Höhe verbindet.

16. Spender nach Anspruch 13, dadurch gekennzeichnet, daß der Fuß (51A, 51B) dem mittleren Bereich der Zunge (52) nahe ist.

17. Spender nach einem der Ansprüche 1 bis 16, dadurch gekennzeichnet, daß die elastische Zunge (62) aus drei Abschnitten (63, 64, 65) besteht, die jeweils paarweise miteinander einen Winkel bilden.

18. Spender nach einem der Ansprüche 1 bis 17, dadurch gekennzeichnet, daß die elastische Zunge (22, 32, 42, 52, 62, 82, 92, 102, 112) den Endteil des Abgabekanals (12) nicht vollständig verschließt, so daß eine Luftaufnahme in den Behälter (2) möglich ist.

19. Spender nach einem der Ansprüche 1 bis 16, dadurch gekennzeichnet, daß die Zunge (32, 42, 62, 82) einen hinteren Teil (35, 45, 65, 85) aufweist, der sich jenseits ihres Bereichs des Anschlusses an den Fuß ( 31, 41, 61, 81-81A) befindet und der auf einem Teil des Abgabekopfs (4) aufliegt.

20. Spender nach Anspruch 19, dadurch gekennzeichnet, daß der hintere Teil (85) nach der Montage des Verschlußorgans (80) auf dem Abgabekopf (4) unter Kompression gesetzt ist.

21. Spender nach einem der Ansprüche 1 bis 20, dadurch gekennzeichnet, daß die Zunge (82) sich im Ruhezustand in einer Ebene erstreckt, die mit einer Ebene, die zu der Ebene, in der sich der Fuß (81-81A) erstreckt, senkrecht ist, einen Winkel bildet, wobei dieser Winkel größer als der Winkel ist, den dieselben Ebenen miteinander bilden, wenn das Verschlußorgan (80) auf dem Abgabekopf (4) befestigt ist.

22. Spender nach einem der Ansprüche 1 bis 21, dadurch gekennzeichnet, daß der Abgabekanal (12) zum Teil im Inneren des Verschlußorgans gebildet ist.

23. Spender nach einem der Ansprüche 1 bis 22, dadurch gekennzeichnet, daß der das Verschlußorgan tragende Abgabekopf (4) auf dem Behälter (2) so montiert ist, daß er gegenüber diesem beweglich ist.

24. Spender nach Anspruch 23, dadurch gekennzeichnet, daß der das Verschlußorgan (90) tragende Abgabekopf (4) eine zylindrische Außenbuchse (4A), eine Haltebuchse (4B) und eine Innenbuchse (4C) aufweist, die zylindrisch und koaxial sind und einen kreisförmigen Querschnitt haben und die einen mit einem Längsausschnitt (11) versehenen hohlen Nippel (10) umgeben, wobei der Behälter (2) einen Kanal (6) aufweist, der zwischen dem hohlen Nippel (10) und der Innenbuchse (4C) dicht montiert ist und mit einem Ausschnitt (11) versehen ist, wobei der Abgabekanal (12) innen in dem zwischen dem hohlen Nippel (10) und der Innenbuchse (4C) abgegrenzten ringförmigen Raum auf Höhe des Ausschnitts (11) des hohlen Nippels (10) ausmündet und wobei der Abgabekopf (4) auf diese Weise auf dem Behälter (2) drehbar montiert ist.

25. Spender nach einem der Ansprüche 1 bis 22, dadurch gekennzeichnet, daß das Verschlußorgan (100, 110) und mindestens ein Teil des Abgabekanals (12) von einem beweglichen Organ (104, 114) getragen werden, das auf dem Abgabekopf (4) und bezüglich diesem beweglich montiert ist.

26. Spender nach Anspruch 25, dadurch gekennzeichnet, daß das bewegliche Organ (104) bezüglich des Abgabekopfs (4) translationsbeweglich ist.

27. Spender nach Anspruch 25, dadurch gekennzeichnet, daß das bewegliche Organ (114) auf dem Abgabekopf (4) drehbar montiert ist.

28. Spender nach einem der Ansprüche 1 bis 27, dadurch gekennzeichnet, daß der Abgabekopf (4) durch Einklinkung angebracht ist.

29. Spender nach einem der Ansprüche 1 bis 27, dadurch gekennzeichnet, daß der Abgabekopf (4) durch Verschraubung angebracht ist.

30. Spender nach einem der Ansprüche 1 bis 27, dadurch gekennzeichnet, daß Schnellöffnungsmittel mit mindestens einer Schräge die Trennung des Abgabekopfs (4) von dem Spender gestatten.

31. Spender nach einem der Ansprüche 1 bis 30, dadurch gekennzeichnet, daß der Abgabekopf (4d, 4e, 4f, 4g) mit einem Folienscharnier (F) zur Verbindung zwischen der Wand des Abgabekopfs und einem mit der elastischen Zunge (22d, 22e, 22f, 22g) versehenen Teil (10d, 10e1, 21f, 21g) aus einem Stück gegossen bzw. geformt ist.

32. Spender nach Anspruch 31, dadurch gekennzeichnet, daß der Abgabekopf (4d, 4e, 4f, 4g) aus zwei Werkstoffen hergestellt ist, wobei die elastische Zunge (22d, 22e, 22f, 22g) aus einem aufgespritzten Werkstoff hergestellt ist, der flexibler als der Werkstoff des Körpers des Abgabekopfs ist.

## Claims

1. Assembly for dispensing a fluid product, which includes a container (2) and a dispensing head (4) provided with a dispensing channel (12) which opens onto the outside, a closure system being located at that one of the ends of the dispensing channel which opens onto the outside, the said closure system being formed, on the one hand, by a seat (15) which forms part of a piece of the dispensing head (4) and, on the other hand, by the flexible leaf (22, 32, 42, 52, 62, 82, 92, 102, 112, 22d, 22e, 22f, 22g) of a closure member (20, 30, 40, 50, 60, 80, 90, 100, 110) made of flexible material, the said flexible leaf having a longitudinal mid-plane of symmetry, the said closure member including, on the one hand, the said flexible leaf and, on the other hand, a stressing member consisting of a heel (21, 31, 41, 51A, 51B, 61, 81-81A, 91, 101, 111) fixed to the dispensing head (4), the said heel having a mean plane which is perpendicular to the longitudinal mid-plane of symmetry of the flexible leaf and which contains the centre of gravity of the heel, the flexible leaf having, in its longitudinal mid-plane of symmetry, a mid-line which, near the heel, is substantially straight, the mid-line of the flexible leaf near the heel making an angle with a plane parallel to the mid-plane of the heel, the said flexible leaf interacting with the seat (15) in order, when there is no dispensing, to close off the open end of the dispensing channel (12) in a sealed or unsealed manner and at least partially moving away from the said seat (15) by flexing under the pressure of the product to be dispensed and returning by elasticity to its initial position, when dispensing ceases, under the action of the said stressing member, the heel forming the only member for stressing the flexible leaf which has a tendency to bring it back to its initial position, characterized in that the leaf (22, 32, 42, 52, 62, 82, 92, 102, 112, 22d, 22e, 22f, 22g) is made of a material that is able to deform elastically, in that the heel (21, 31, 41, 51A, 51B, 61, 81-81A, 91, 101, 111) constitutes a region of the closure member whose thickness, in its region of connection with the leaf made of material that can deform elastically, is greater than that of the flexible leaf (22, 32, 42, 52, 62, 82, 92, 102, 112, 22d, 22e, 22f, 22g), the thickness of the heel (21, 31, 41, 51A, 51B, 61, 81-81A, 91, 101, 111) being referenced, perpendicularly to the mid-plane of the heel (21, 31, 41, 51A, 51B, 61, 81-81A, 91, 101, 111), on the projection of the heel (21, 31, 41, 51A, 51B, 61, 81-81A, 91, 101, 111) on the longitudinal mid-plane of symmetry of the flexible leaf (22, 32, 42, 52, 62, 82, 92, 102, 112, 22d, 22e, 22f, 22g) whereas the thickness of the flexible leaf (22, 32, 42, 52, 62, 82, 92, 102, 112, 22d, 22e, 22f, 22g) is referenced, in its longitudinal mid-plane of symmetry, perpendicularly to the mid-line of the said flexible leaf.

2. Dispensing assembly according to Claim 1, characterized in that the springy leaf (22, 32, 42, 52, 62, 82, 92, 102, 112, 22d, 22e, 22f, 22g) is thinner and/or narrower at its end opposite the heel (21, 31, 41, 51, 61, 81, 91, 101, 111).

3. Dispensing assembly according to either of Claims 1 and 2, characterized in that the springy leaf (22, 32, 42, 52, 62, 82, 92, 102, 112, 22d, 22e, 22f, 22g) is set into the wall of the dispensing head (4), at least in the region of its closing end.

4. Dispensing assembly according to one of Claims 1 to 3, characterized in that the heel (41, 51A, 51B, 81, 91, 101, 111) has a parallelepipedal general shape.

5. Dispensing assembly according to Claim 4, characterized in that the heel (41, 51A, 51B, 81) possesses a long thin catching lug (43, 53A, 53B, 83).

6. Dispensing assembly according to one of Claims 1 to 3, characterized in that the heel (31, 61, 81A) has a cylindrical general shape.

7. Dispensing assembly according to Claim 6, characterized in that the heel (31, 61, 101) has an annular shape.

8. Dispensing assembly according to one of Claims 4 to 6, characterized in that the heel is in two pieces (51A-51B, 81-81A).

9. Dispensing assembly according to one of Claims 1 to 8, characterized in that the heel (21, 31, 41, 51A, 51B, 61, 81-81A, 91) is forcibly fitted into a corresponding housing in the dispensing head (4).

10. Dispensing assembly according to one of Claims 1 to 9, characterized in that the heel (21, 51A, 51B, 61) extends approximately perpendicularly to the plane in which the springy leaf (22, 52, 62, 72 [sic]) extends.

11. Dispensing assembly according to one of Claims 1 to 9, characterized in that the heel (31, 41, 81-81A, 101, 111) and the plane in which the springy leaf (32, 42, 82, 102, 112) extends form an angle between them which differs from 90°.

12. Dispensing assembly according to one of Claims 1 to 11, characterized in that the heel (41, 61, 81, 101, 111) is placed transversely with respect to the leaf (42, 62, 82, 102, 112) and to the rear of it.

13. Dispensing assembly according to one of Claims 1 to 11, characterized in that the heel (51A-51B) extends parallel to the longitudinal axis of the leaf (52), on each side of it.

14. Dispensing assembly according to Claim 13, characterized in that the heel (51A, 51B) is close to the rear area of the leaf (52).

15. Dispensing assembly according to Claim 13, characterized in that a strengthening crosspiece (51C) connects, over part of their height close to the leaf (52), the two pieces (51A, 51B) constituting the heel.

16. Dispensing assembly according to Claim 13, characterized in that the heel (51A, 51B) is close to the central area of the leaf (52).

17. Dispensing assembly according to one of Claims 1 to 16, characterized in that the springy leaf (62) possesses three portions (63, 64, 65) making, in pairs, an angle between them.

18. Dispensing assembly according to one of Claims 1 to 17, characterized in that the springy leaf (22, 32, 42, 52, 62, 82, 92, 102, 112) does not completely close the terminal part of the dispensing channel (12) so that air uptake into the container (2) is permitted.

19. Dispensing assembly according to one of Claims 1 to 16, characterized in that the leaf (32, 42, 62, 82) possesses a rear part (35, 45, 65, 85) extending beyond its area of connection to the heel (31, 41, 61, 81-81A), the said rear part (35, 45, 65, 85) bearing on part of the dispensing head (4).

20. Dispensing assembly according to Claim 19, characterized in that the rear part (85) is compressed after mounting the closure member (80) on the dispensing head (4).

21. Dispensing assembly according to one of Claims 1 to 20, characterized in that the leaf (82) extends, at rest, in a plane which makes an angle with a plane perpendicular to the one in which the heel (81-81A) extends, the said angle being greater than the one that these same planes make when the closure member (80) is fixed to the dispensing head (4).

22. Dispensing assembly according to one of Claims 1 to 21, characterized in that the dispensing channel (12) is made partly inside the closure member.

23. Dispensing assembly according to one of Claims 1 to 22, characterized in that the dispensing head (4) which carries the closure member is mounted on the container (2), being able to move with respect to it.

24. Dispensing assembly according to Claim 23, characterized in that the dispensing head (4), which carries the closure member (90), possesses an external cylindrical skirt (4A), a retaining skirt (4B) and an internal skirt (4C), these being cylindrical, coaxial and of circular section, surrounding a hollow endpiece (10) provided with a longitudinal cut-out (11), the container (2) carrying a conduit (6) mounted in a sealed manner between the hollow endpiece (10) and the internal skirt (4C), the conduit (6) being provided with a cut-out (11), the dispensing channel (12) emerging on the inside into the annular space defined between the hollow endpiece (10) and the internal skirt (4C) in line with the cut-out (11) of the hollow endpiece (10), the dispensing head (4) thus being mounted so as to rotate on the container (2).

25. Dispensing assembly according to one of Claims 1 to 22, characterized in that the closure member (100, 110) and at least part of the dispensing channel (12) are carried by a movable member (104, 114) mounted on the dispensing head (4) so as to move with respect to it.

26. Dispensing assembly according to Claim 25, characterized in that the movable member (104) can be moved translationally with respect to the dispensing head (4) .

27. Dispensing assembly according to Claim 25, characterized in that the movable member (114) is mounted so as to rotate on the dispensing head (4).

28. Dispensing assembly according to one of Claims 1 to 27, characterized in that the dispensing head (4) is mounted by snap-fastening.

29. Dispensing assembly according to one of Claims 1 to 27, characterized in that the dispensing head (4) is mounted by screwing.

30. Dispensing assembly according to one of Claims 1 to 27, characterized in that rapid-opening means having at least one ramp permit the dispensing head (4) of the dispensing assembly to be unfastened.

31. Dispensing assembly according to one of claims 1 to 30, characterized in that the dispensing head (4d, 4e, 4f, 4g) is moulded as a single piece together with a linking film-hinge (F) between the wall of the dispensing head and a part (lOd, 20e1, 21f, 21g) provided with the springy leaf (22d, 22e, 22f, 22g).

32. Dispensing assembly according to Claim 31, characterized in that the dispensing head (4d, 4e, 4f, 4g) is made of two materials, the springy leaf (22d, 22e, 22f, 22g) being made of an injection-overmoulded material which is more flexible than the material of the body of the dispensing head.
